# EUROPÄISCHE PATENTSCHRIFT

(11) **EP 1 312 898 B1**
(45) Veröffentlichungstag und Bekanntmachung des Hinweises auf die Patenterteilung: **20.07.2011**
(21) Anmeldenummer: 02018548.4
(22) Anmeldetag: 17.08.2002
(51) Int. Cl.: G01F 23/38

(54) **Berührungslose Füllstandssensorik**
Contact free sensor system
Système de capteur sans contact

(30) Priorität: 16.11.2001 DE 10156479
(43) Veröffentlichungstag der Anmeldung: 21.05.2003
(73) Patentinhaber: TI Automotive (Neuss) GmbH, 41456 Neuss (DE)
(72) Erfinder: Bürger, Frank, 52355 Düren (DE); Ludwig, Norbert, 41379 Brüggen (DE)
(74) Vertreter: von Kreisler Selting Werner

(56) Entgegenhaltungen:
- WO-A-88/01046
- DE-A- 2 627 865

## Beschreibung

Füllstandssensoren werden zur Füllstandserfassung in Tankanlagen oder dergleichen verwendet.

Bekannte Füllstandssensoren sind u.a. ein Potentiometer mit Schwimmer, wobei seit kürzerer Zeit auch berührungslose Füllstandssensoren eingesetzt werden.

Eine gattungsgemäße Füllstandssensorik ist aus der DE 299 16 121 U1 als auch aus der DE 199 44 330 A1 bekannt. Diese weisen jeweils einen Hebelarm auf, dessen eines Ende als Schwimmer ausgebildet und dessen anderes Ende in einem Trägerteil gelagert ist, und die mindestens einen berührungslosen Magnetsensor aufweisen. Mit dem Hebelarm ist eine Magneteinrichtung verbunden, die bei einer Auslenkung des Hebelarms derart zum Magnetsensor bewegt wird, daß sich das auf den Magnetsensor einwirkende Magnetfeld ändert. Die Führung der Magneteinrichtung erfolgt über eine Kurvenscheibe, die bei Auslenkung des Hebelarms bewegt wird, was zu einer Magnetfeldänderung am Magnetsensor führt. Aus der Schwimmerposition wird ein dem Füllstand entsprechendes Ausgangssignal gewonnen. Der das Signal generierende Sensor kommt dabei mit der Flüssigkeit nicht in Verbindung.

Einen weiteren berührungslosen Füllstandssensor, bestehend aus mehreren Hall-Sensoren, beschreibt die US 4,589,282.

Einen Füllstandssensor nach dem Prinzip der Lichtreflexion offenart die US 5,154,319.

Eine weitere Füllstandssensorik der berührungslosen Art zur Füllstandsanzeige insbesondere einer Warnanzeige, wird in der US 5,686,894 beschrieben. Ein an einem

Hebelarm befindlicher Magnet schließ einen Reed-Kontakt, wenn der Hebel mit einem Schwimmer eine definierte Lage zum Reed-Kontakt einnimmt. Anstelle des Reed-Kontaktes kann auch ein im Stand der Technik offenbarter Hall-Sensor eingesetzt werden. Der Reed-Kontakt befindet sich dabei außerhalb des Behälters.

Aus der JP - A - 08240318 A ist eine Füllstandssensorik bekannt, die zwei Magnete verwendet, die jeweils an einem Hall-Sensor entlang geführt werden. Jeder der Magnete weist dabei an seiner Stirnseite einen halbkreisförmigen Vollmagneten auf. Die Magnete als auch die Hall-Sensoren befinden sich auch hier außerhalb des die Flüssigkeit enthaltenden Behälters.

Aus der WO 88/01046 A ist eine Füllstandssensorik bekannt, bei der einem drehbaren Schwimmer-Hebelarm ein Ringmagnet zugeordnet ist, dessen rotatorische Position durch einen den magnetischen Fluss detektierenden Sensor ermittelt werden kann.

Aus der DE 26 27 865 ist eine weitere Füllstandssensorik bekannt, bei der dem Schwimmer-Hebelarm ebenfalls ein Ringmagnet zugeordnet ist, dessen Drehposition von einem den magnetischen Einfluss detektierenden Sensor ermittelt wird.

Aufgabe der Erfindung ist es, die Genauigkeit der Füllstandssensorik zu verbessern.

Gelöst wird die Aufgabe durch die Merkmale des Patentanspruchs 1.

Der Erfindung liegt die Idee zugrunde, ähnlich wie bei den potentiometrischen Füllstandssensoren, eine rotatorische Bewegung eines Hebels mit Schwimmer und Magneten in eine lineare Signalgewinnung umzuwandeln. Dazu besteht die Füllstandssensorik aus einem diametralen Ringmagneten, dessen Segment vorzugsweise ein Segment in der Winkelgröße des Verstellbereiches der Hebellage ist. Das Magnetfeld wird direkt rotatorisch erfaßt und ausgewertet.

Ein hierbei verwendeter Hall-Sensor zeichnet sich durch seine Programmierbarkeit aus. Der Hall-Sensor verfügt über freiprogrammierbare Stützstellen. Die Festlegung und Programmierung dieser Stützstellen erfolgt entweder individuell an jeder Tankeinheit im verbauten Zustand oder mit vorab festgelegten Referenzpunkten.

Bei der individuellen Festlegung des Stützstellen bzw. Referenzpunkten in der Tankeinheit oder dergleichen werden einzelne Positionen bzw. Stellungen der Hebels bestimmten Ausgangssignalgrößen zugeordnet. So ergibt sich eine für jeden Tank (Füllraum) zugehörige Signalausgangskennlinie.

Die Programmierung kann über einen Komponentenanschlußstecker erfolgen.

Vorteilhaft ist, daß das Ausgangssignal als analoges als auch als digitales Signal ausgegeben werden kann, d.h., für die weitere Verarbeitung anpassungsfähig ist.

Eine individuelle Programmierung hat als weiteren Vorteil, daß sämtliche mechanische Fehler, die durch Toleranzen der Bauteile, wie Hebel, entstehen, eliminiert werden können.

Ein weiterer Vorteil ist die Diagnosefähigkeit der Füllstandssensorik. Sollte beispielsweise der Ringmagnet abfallen, stellt sich ein bestimmtes, programmiertes konstantes Ausgangssignal ein.

In Weitergestaltung der Erfindung ist der Ringmagnet sehr dünn gestaltet, so daß seine Feldabwicklung selbst linear ist. Durch das lineare Feldverhalten wird der auswertbare Bereich auf über 100 Winkelgrade erhöht . Die Linearität des auswertbaren Bereiches stellt zudem eine genauere Auswertung für die Sensoren dar. Insbesondere die Montage des Magneten wird dabei vereinfacht. Weiterhin ist es möglich, daß der Ringmagnet nur durch ein Teilsegment gebildet wird.

Die vorgeschlagene Füllstandssensorik hat den Vorteil, daß sie unabhängig vom Tanktyp und Tankvolumen genutzt werden kann, d.h., sie ist durch ihre Programmierbarkeit modulartig ausführbar.

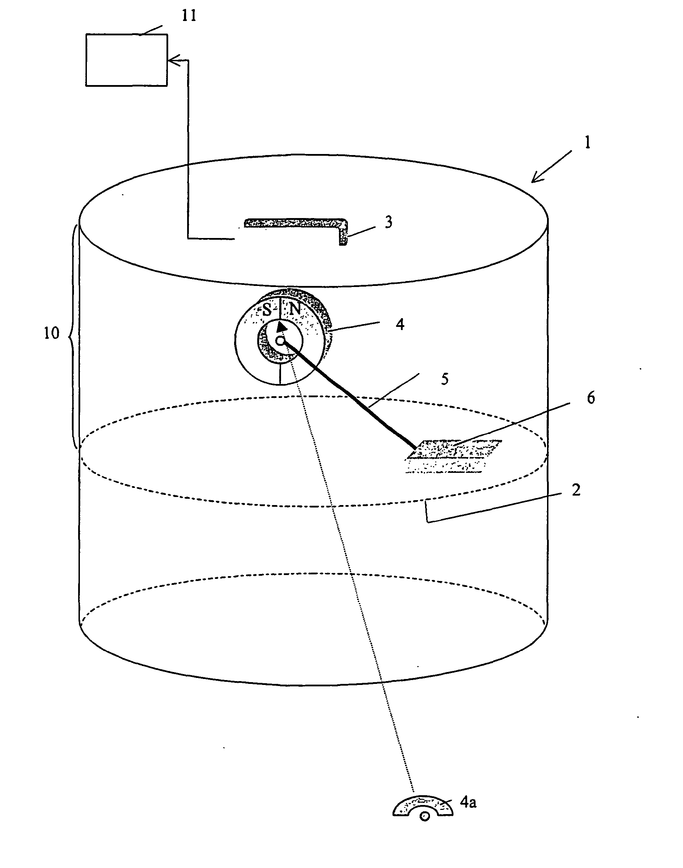

Anhand eines Ausführungsbeispieles mit Zeichnung soll die Erfindung näher erläutert werden. Es zeigt die einzige Figur eine Prinzipdarstellung einer erfindungsgemäßen Füllstandssensorik.

Mit 1 ist ein Tank oder ähnlicher Behälter für Flüssigkeiten 2 dargestellt, in dessen Inneren sich zumindest ein Sensor 3, hier ein programmierbarer Hall-Sensor, ein diametraler Ringmagnet 4 sowie ein mit dem Ringmagenten 4 funktional zusammenwirkender Hebel 5 befinden, an dem an einem Ende ein Schwimmer 6 angebracht ist. Diese bilden eine Füllstandssensorik 10.

Der Hebel 5 ist an seinem anderen Ende drehbar gelagert, wobei sichergestellt ist, daß der daran befestigte Magnet 4 diese Drehbewegung mitmacht. In unmittelbarer Nähe des Magneten 4 ist der Sensor 3 angebracht, der seinerseits mit einer Auswerteelektronik 11 in Verbindung steht.

Je nach Füllstand, d.h. Höhe der Flüssigkeit 2 im Behälter 1 verändert der Schwimmer 6 seine Lage bezogen auf die Behälterhöhe, wodurch der Hebel 5 und der Magnet 4 bewegt werden, wobei der Magnet 4 seine Pol- Lage zum Sensor 3 und damit seinen Magnetfeldeinfluß auf den Sensor 3 verändert, was in bekannter Art und Weise eine Veränderung des Ausgangssignales des Sensors 3 bewirkt.

Die Programmierung des Sensors 3 erfolgt bei Kenntnis des Behältertyps vorzugsweise vorab, wobei beispielsweise jedem einzelnen Liter ein Sensorsignal zugeordnet und in Stützstellen eingelesen wird. In der Praxis hat sich gezeigt, daß eine Anzahl von 32 Stützstellen ausreichend ist, um beim Litern ein sauberes Signal auszugeben. Die Programmierung kann aber auch erst beim Einbau in den Behälter 1 erfolgen. Die Festlegung und Programmierung der Stützstellen erfolgt also individuell an jeden Behälter 1 im verbauten Zustand oder mit vorab festgelegten Referenzpunkten.

Der Ringmagnet 4 ist in einer bevorzugten Ausführung als Teilsegment 4a und nicht als Vollring ausgeführt. Wird hierbei eine Dicke von ca. 1,1 Außendurchmesser zu Innendurchmesser eingehalten, ergibt dies eine lineare Feldabwicklung, was Meßgenauigkeit der Füllstandssensorik 10 erhöht.

## Patentansprüche

1. Füllstandssensorik (10) für einen Flüssigkeitsbehälter (1), vorzugsweise für einen Kraftstoffbehälter für ein Kraftfahrzeug, mit
einem Hebelarm (5), an dessen einem Ende ein Schwimmer (6) angebracht und dessen anderes Ende drehbar gelagert ist und mit einem Ringmagneten (4) in funktionaler Verbindung steht, dem ein Sensor (3) zugeordnet ist,
wobei bei Auslenkung des Hebels (5) der Ringmagnet (4) mit ausgelenkt wird, so dass dieser seinen magnetischen Einfluss auf den Sensor (3) verändert, was ein dem Füllstand entsprechendes Ausgangssignal bewirkt,
**dadurch gekennzeichnet,**
**dass** der Sensor (3) derart programmierbar ist, dass er über frei programmierbare Stützstellen verfügt, wobei durch die Stützstellen einzelne Stellungen des Hebels (5) bestimmten Ausgangssignalgrößen am Sensor (3) zugeordnet sind, so dass eine zugehörige Signalausgangslinie erzeugt wird.

2. Füllstandssensorik nach Anspruch 1, **dadurch gekennzeichnet, daß** der programmierbare Sensor (3) ein Hall-Sensor ist.

3. Füllstandssensorik nach Anspruch 1 oder 2, **dadurch gekennzeichnet, daß** der Ringmagnet (4) sehr dünn ausgeführt ist, so daß seine Feldabwicklung selbst linear ist.

4. Füllstandssensorik nach einem der Ansprüche 1 bis 3, **dadurch gekennzeichnet, daß** der Ringmagnet (4) durch einen Teilsegment-Ringmagnet (4a) gebildet wird.

5. Füllstandssensorik nach einem der Anspürche 1 bis 4, **dadurch gekennzeichnet, daß** die Festlegung und Programmierung der Stützstellen entweder individuell an jeden Behälter (1) im verbauten Zustand oder mit vorab festgelegten Referenzpunkten erfolgt.

6. Füllstandssensorik nach einem der Ansprüche 1 bis 5, **dadurch gekennzeichnet, daß** mechanische Toleranzen des Behälters (1) sowie der Füllstandssensorik (10) selbst eliminiert werden können.

7. Füllstandssensorik nach einem der Ansprüche 1 bis 6, **dadurch gekennzeichnet, daß** das Ausgangssignal des Sensors (3) als analoges als auch als digitales Signal ausgegeben wird.

8. Füllstandssensorik nach einem der Ansprüche 1 bis 7, **gekennzeichnet durch** eine eigene Diagnosefähigkeit.

## Claims

1. Level sensor system (10) for a liquid container (1), preferably for a fuel container of a motor vehicle, comprising
a lever arm (5), one end of which is mounted with a float (6) and the other end of which is rotatably supported and is operatively connected with an annular magnet (4) to which a sensor (3) is associated,
wherein upon a deflection of the lever (5), the annular magnet (4) is deflected along therewith so that it changes its magnetic influence on the sensor (3) whereby an output signal is caused that corresponds to the level,
**characterized in that**
the sensor (3) is programmable such that it has freely programmable nodes, the nodes associating individual positions of the lever (5) to specific output signal values at the sensor (3) so that an associated signal output line is generated.

2. Level sensor system of claim 1, **characterized in that** the programmable sensor (3) is a Hall sensor.

3. Level sensor system of claim 1 or 2, **characterized in that** the annular magnet (4) is of a very thin design so that its field development itself is linear.

4. Level sensor system of one of claims 1 to 3, **characterized in that** the annular magnet (4) is formed by a partial segment annular magnet (4a).

5. Level sensor system of one of claims 1 to 4, **characterized in that** the specification and the programming of the nodes is done either individually for each container (1) in the mounted condition or with the use of reference points set in advance.

6. Level sensor system of one of claims 1 to 5, **characterized in that** mechanical tolerances of the container (1) as well as of the level sensor system (10) itself can be eliminated.

7. Level sensor system of one of claims 1 to 6, **characterized in that** the output signal of the sensor (3) is outputted as both an analog and a digital signal.

8. Level sensor system of one of claims 1 to 7, **characterized by** its ability for self-diagnosis.

## Revendications

1. Système de capteurs de niveau (10) pour un récepteur de liquide (1), de préférence pour un réservoir de carburant d'un véhicule automobile, comprenant
un bras de levier (5) dont l'une de ses extrémités est munie d'un flotteur (6) et l'autre extrémité est supportée de façon rotative et est en liaison fonctionnelle avec un aimant annulaire (4) auquel est associé un capteur (3),
ledit aimant annulaire (4) étant dévié avec la déviation dudit levier (5), de sorte que ledit aimant change son influence magnétique sur ledit capteur (3), ainsi effectuant un signal de sortie correspondant au niveau,
**caractérisé en ce que**
ledit capteur (3) est programmable de sorte qu'il a des points librement programmables, lesdits points associant des positions individuelles dudit levier (5) à certaines valeurs du signal de sortie au capteur (3) de sorte qu'une ligne de sortie du signal associée est générée.

2. Système de capteurs de niveau selon la revendication 1, **caractérisé en ce que** ledit capteur (3) programmable est un capteur à effet Hall.

3. Système de capteurs de niveau selon la revendication 1 ou 2, **caractérisé en ce que** ledit aimant annulaire (4) est très mince, de sorte que son développement de champ lui-même est linéaire.

4. Système de capteurs de niveau selon l'une quelconque des revendications 1 à 3, **caractérisé en ce que** ledit aimant annulaire (4) est formé par un aimant annulaire en forme de segment partiel (4a).

5. Système de capteurs de niveau selon l'une quelconque des revendications 1 à 4, **caractérisé en ce que** les points sont définis et programmés soit individuellement pour chaque réservoir (1) en état monté, soit selon des points de référence définis préalablement.

6. Système de capteurs de niveau selon l'une quelconque des revendications 1 à 5, **caractérisé en ce que** des tolérances mécaniques du réservoir (1) et du système de capteurs de niveau (10) lui-même peut être éliminées.

7. Système de capteurs de niveau selon l'une quelconque des revendications 1 à 6, **caractérisé en ce que** ledit signal de sortie du capteur (3) est fait sortir comme signal analogue et signal numérique.

8. Système de capteurs de niveau selon l'une quelconque des revendications 1 à 7, **caractérisé par** la capacité auto-diagnostique.
